**Europäisches Patentamt**

**European Patent Office**

**Office européen des brevets**

(19)

(11) Veröffentlichungsnummer: **0 114 378**

**B1**

(12) **EUROPÄISCHE PATENTSCHRIFT**

(45) Veröffentlichungstag der Patentschrift:
**25.01.89**

(21) Anmeldenummer: **83112967.1**

(22) Anmeldetag: **22.12.83**

(51) Int. Cl.⁴: **F 02 D 41/40**

(54) Kraftstoffeinspritzvorrichtung für Brennkraftmaschinen.

(30) Priorität: **25.01.83 DE 3302293**

(43) Veröffentlichungstag der Anmeldung:
**01.08.84 Patentblatt 84/31**

(45) Bekanntmachung des Hinweises auf die Patenterteilung:
**25.01.89 Patentblatt 89/4**

(84) Benannte Vertragsstaaten:
**AT DE FR GB**

(56) Entgegenhaltungen:
**FR-A-2 218 483**
**GB-A-2 041 573**
**US-A-3 742 918**
**US-A-4 265 200**

**PATENT ABSTRACTS OF JAPAN, 27.07.1981, Seite 140 M 93**

(73) Patentinhaber: **Klöckner- Humboldt- Deutz Aktiengesellschaft, Deutz- Mülheimer- Strasse 111 Postfach 80 05 09, D-5000 Köln 80 (DE)**

(72) Erfinder: **Wallenfang, Gerd, Ing., Reinekestrasse 23, D-5000 Köln 90 (DE)**
Erfinder: **Glöckner, Manfred, Dr.- Ing., Venloer Strasse 1500, D-5024 Pulheim 1 (DE)**

**Beschreibung**

Die Erfindung bezieht sich auf eine Kraftstoffeinspritzvorrichtung für eine luftverdichtende, selbstzündende Hubkolbenbrennkraftmaschine mit einer Kraftstoffeinspritzpumpe und je einer Einspritzdüse für jede Zylindereinheit nach dem Oberbegriff des Anspruchs 1.

Eine derartige Kraftstoffeinspritzvorrichtung mit einem elektromagnetischen Steuerventil und einer Meßwertverarbeitungseinrichtung ist aus der DE-OS-2 026 665 bekannt. Hierbei ist je Zylindereinheit ein elektromagnetisches Steuerventil vorgesehen, das auf der Druckseite der Kraftstoffeinspritzpumpe einen Abströmkanal beherrscht, der durch das Steuerventil insbesondere zur Regelung des Einspritzendes der Kraftstoffeinspritzvorrichtung freigebbar ist. Um bei einer derartigen Kraftstoffeinspritzvorrichtung die verschleiß- und betriebsbedingten Streuungen des Übertragungsverhaltens der elektromagnetischen Steuerventile ausgleichen zu können, wird nach der DE-OS-2 026 665 vorgeschlagen, die Istwertsteuerzeiten eines einzigen elektromagnetischen Steuerventils zu ermitteln und die übrigen elektromagnetischen Steuerventile unter Berücksichtigung des Vergleiches der Istwertsteuerzeiten dieses elektromagnetischen Steuerventils und der Sollwertsteuerzeiten der elektrisch arbeitenden Meßwertverarbeitungseinrichtung anzusteuern. Da das Übertragungsverhalten der einzelnen elektromagnetischen Steuerventile jedoch aufgrund spezifischer Verschleißerscheinungen sehr unterschiedlich sein kann, können mit einer derartigen Vorrichtung die Streuungen der einzelnen Steuerventile nur sehr unzureichend ausgeglichen werden.

Aus der GB-A-2 041 573 ist eine Kraftstoffeinspritzvorrichtung bekannt, bei der jeder Einspritzdüse ein Steuerventil zugeordnet ist. Eine Meßwertverarbeitungseinrichtung vergleicht den festgestellten Einspritzzeitpunkt eines vorherigen Einspritzzyklus mit einem vorgegebenen Sollwert und regelt den Steuerbefehl für die nächste Einspritzung für die überwachte Einspritzdüse entsprechend den festgestellten Abweichungen nach. Um auf diese Weise den richtigen Einspritzzeitpunkt jeder Einspritzdüse einzustellen, wird die zentrale Meßwertverarbeitungseinrichtung nach Art eines Multiplexers betrieben. Dies erfordert jedoch für jede Einspritzdüse sowohl eine getrennte Berechnung wie eine getrennte Anpassung des zugeordneten Steuerbefehls.

Die aus der US-A-4 265 200 bekannte Kraftstoffeinspritzvorrichtung betrifft eine Verteilereinspritzpumpe, deren Einspritzmenge von einer Meßwertverarbeitungseinrichtung gesteuert ist. Ein aus einem Kennfeld ausgelesenes Sollsignal wird einem Vergleicher zugeführt, der ein Stellglied ansteuert, das die Einspritzzeitpunktverstellung gleichzeitig an allen an der Brennkraftmaschine angeordneten Einspritzdüsen vornimmt. Um zu überprüfen, ob die Verstellung gemäß dem Sollsignal vorgenommen wurde, ist ein Sensor vorgesehen, der den wirklichen Einspritzzeitpunkt dem Vergleicher meldet. Eine derartige geschlossene Regelschleife ist zur Ausführung von Stellbewegungen (Weg) insbesondere bei der vorgeschlagenen hydraulischen Steuerung zwingend notwendig.

Ist an der Brennkraftmaschine mehr als ein Einspritzventil vorgesehen, dann werden deren Sensorsignale kumuliert und als einziges Signal dem Vergleicher zur Auswertung zugeführt.

Eine individuelle Steuerung des Einspritzzeitpunktes an jeder einzelnen Einspritzdüse ist mit dieser Kraftstoffeinspritzvorrichtung nicht möglich.

Der Erfindung liegt die Aufgabe zugrunde, die unterschiedlichen Antwortzeiten der zur Steuerung des Einspritzzeitpunkts an jeder Einspritzdüse angeordneten Steuerventile zu vergleichmäßigen.

Die Aufgabe wird erfindungsgemäß durch die kennzeichnenden Merkmale des Anspruchs 1 gelöst.

Durch diese Ausbildung sind die Streuungen bzw. unterschiedlichen Übertragungsverhalten der elektromagnetischen Steuerventile auf einfache Weise und unabhängig voneinander auszugleichen. Die konstante Verzögerungszeit ist dabei derart ausgelegt, daß die magnetischen, elektrischen und mechanischen Fehlereinflüsse auf das Übertragungsverhalten der elektromagnetischen Steuerventile umfassend berücksichtigt sind. Die erfindungsgemäße Verzögerungseinrichtung, die jedem Steuerventil einer mehrzylindrigen Hubkolbenbrennkraftmaschine vorgeschaltet ist, macht die Ansprechzeit der Einspritzventile bei allen Zylindern gleich, so daß die Meßwertverarbeitungseinrichtung bei der Berechnung des Einspritzzeitpunktes - unabhängig von dem jeweils anzusteuernden Zylinder - von einer konstanten Verzögerungszeit ausgeht, die der Referenzzeit des ersten Verzögerungsgliedes entspricht. Auf diese Weise werden die verschiedenen Antwortzeiten der verwendeten Steuerventile egalisiert, so daß der Rechenaufwand zur Ermittlung des Einspritzzeitpunktes veringert werden kann und die Meßwertverarbeitungseinrichtung vereinfacht ist. Mit einer fest vorgegebenen Verzögerungszeit zwischen dem Steuerimpuls und dem Einspritzbeginn für alle Zylinder kann eine wesentliche Systemvereinfachung erzielt werden.

In der Praxis hat sich in vielen Anwendungsfällen eine konstante Verzögerungszeit von 2,56 ms als ausreichend herausgestellt, was ferner auch noch den weiteren Vorteil beinhaltet, daß die konstante Verzögerungszeit von 2,56 ms mit elektrischen Bauteilen einfach verwirklicht werden kann.

Vorteilhafte Ausgestaltungen der Erfindung, insbesondere zur Darstellung der konstanten Verzögerungszeit in Abhängigkeit der Drehzahl der Brennkraftmaschine und der schaltungtechnischen Veränderung des Ansteuerzeitpunktes des elektromagnetischen Steuerventils im Öffnungs- und/oder Schließsinn, sind in den Unteransprüchen angegeben und in der nachfolgenden Beschreibung von in den Zeichnungen dargestellten Ausführungsbeispielen näher erläutert.

Es zeigen:

Fig. 1   eine schematische Seitenansicht einer Hubkolbenbrennkraftmaschine mit einer erfindungsgemäßen Kraftstoffeinspritzvorrichtung;

Fig. 2   einen Querschnitt entsprechend der Schnittlinien II - II in Fig. 1;

Fig. 3   ein Schaltschema der erfindungsgemäßen Verzögerungseinrichtung für das elektromagnetische Steuerventil;

Fig. 4   ein Schaltschema zur Darstellung der konstanten Verzögerungszeit in Abhängigkeit der Istdrehzahl der Brennkraftmaschine und zur Veränderung des Ansteuerzeitpunktes des Steuerventils in Abhängigkeit der konstanten Zeitverzögerung;

Fig. 5   ein Schaltschema des Phasendiskriminators der Verzögerungseinrichtung und Steuerdiagramme des Phasendiskriminators;

Fig. 6   ein Ablaufschema der erfindungsgemäßen Kraftstoffeinspritzvorrichtung während eines Arbeitstaktes für eine Sechszylinder-Viertakt-Brennkraftmaschine.

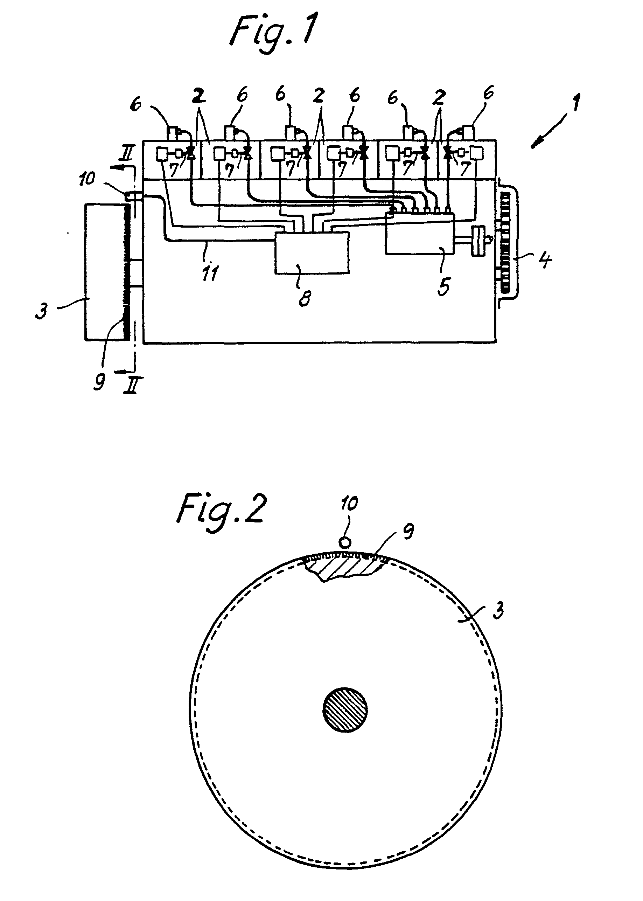

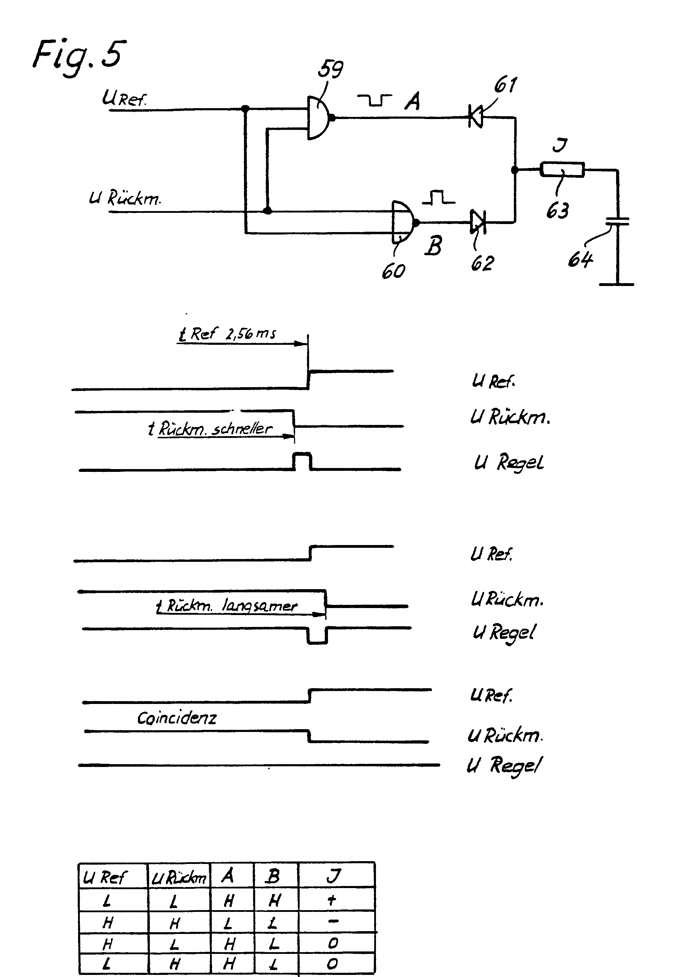

Die Fig. 1 zeigt schematisch eine luftverdichtende, selbstzündende Hubkolbenbrennkraftmaschine 1, wobei nur die zum unmittelbaren Verständnis der Erfindung erforderlichen Einheiten näher dargestellt sind. Die Hubkolbenbrennkraftmaschine 1 weist sechs in Reihe angeordneten Zylindereinheiten 2, ein Schwungrad 3, einen Räderkasten 4 und eine Einspritzpumpe 5 in Blockbauart auf. Die Einspritzpumpe 5 ist - nicht näher dargestellt - in bekannter Weise antriebsseitig mit dem Räderkasten 4 verbunden und fördert Kraftstoff zu den Einspritzdüsen 6, wobei der Kraftstoff aus einem nicht näher dargestellten Kraftstoffbehälter über eine Kraftstofförderpumpe der Einspritzpumpe 5 zugeführt wird. Zur Veränderung des Einspritzbeginns und des Einspritzendes bzw. der Einspritzdauer der Einspritzdüsen 6 ist je Zylindereinheit 2 ein elektromagnetisches Steuerventil 7 vorgesehen, das jeweils einen nicht gezeigten Abströmkanal beherrscht. Weiterhin ist ein Zentralregelgerät vorgesehen, das eine nicht näher dargestellte elektrisch arbeitende Meßwertverarbeitungseinrichtung 8 beinhaltet, die mit geeigneten nicht gezeigten Meßwertgebern zusammenwirkt und in Abhängigkeit von charakteristischen Einflußgrößen der Hubkolbenbrennkraftmaschine 1, beispielsweise Temperatur, Drehzahl etc., die elektromagnetischen Steuerventile 7 mittels Steuerimpulsen ansteuert. Da die elektromagnetischen Steuerventile aufgrund betriebs- und verschleißbedingter Übertragungsfehler auf die von der elektrischen Meßwertverarbeitungseinrichtung erzeugten Steuerimpulse ventilspezifisch verzögert ansprechen, ist innerhalb des Zentralregelgerätes für jedes elektromagnetische Steuerventil 7 erfindungsgemäß eine Verzögerungseinrichtung vorgesehen, die unter Berücksichtigung des steuerventilspezifischen Übertragungsverhaltens der Steuerimpulse der Meßwertverarbeitungseinrichtung 8 derart auf das jeweilige elektromagnetische Steuerventil 7 überträgt, daß jedes elektromagnetische Steuerventil 7 jeder Zylindereinheit 2 bei jedem Ansteuervorgang mit einer konstanten Verzögerungszeit von beispielsweise 2,56 ms öffnet und schließt. Da der konstanten Verzögerungszeit von 2,56 ms bei sich ändernden Drehzahlen der Hubkolbenbrennkraftmaschine 1 ein unterschiedlicher Kurbelwellenwinkelbereich entspricht, sind auf dem Schwungrad 3 Winkelimpulsgeber 9 mit einer 1°-Winkelteilung angeordnet, die in einem Sensor 10 von der Istdrehzahl der Hubkolbenbrennkraftmaschine 1 abhängige Impulsfolgen erzeugen, die in einer ebenfalls im Zentralregelgerät vorgesehenen geeigneten Schaltung, auf die noch näher eingegangen wird, zur Darstellung der konstanten Verzögerungszeit in Abhängigkeit der Istdrehzahl der Hubkolbenbrennkraftmaschine 1 herangezogen werden. Die Winkelimpulsgeber 9 umfassen einen nicht näher dargestellten Synchronimpulsgeber, der in dem Sensor 10 eine den Beginn des Arbeitstaktes der Hubkolbenbrennkraftmaschine 1 kennzeichnenden Synchronimpuls erzeugt, der in einer Schaltung des Zentralregelgerätes auswertbar ist und dem inneren Totpunkt I (Fig. 5) der in der Zündfolge ersten Zylindereinheit 2 eines Arbeitstaktes der Hubkolbenbrennkraftmaschine 1 zugeordnet ist.

Fig. 2 verdeutlicht in einer Querschnittsdarstellung entsprechend der Schnittlinien II - II die Winkelimpulsgeber 9 und den dazugehörigen Sensor 10 am Schwungenrad 3 der Hubkolbenbrennkraftmaschine 1.

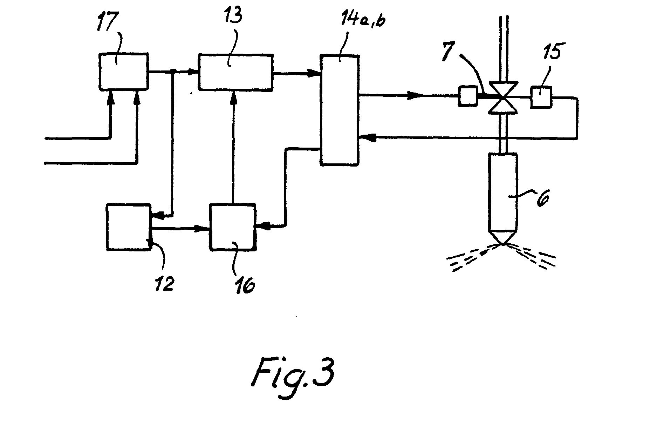

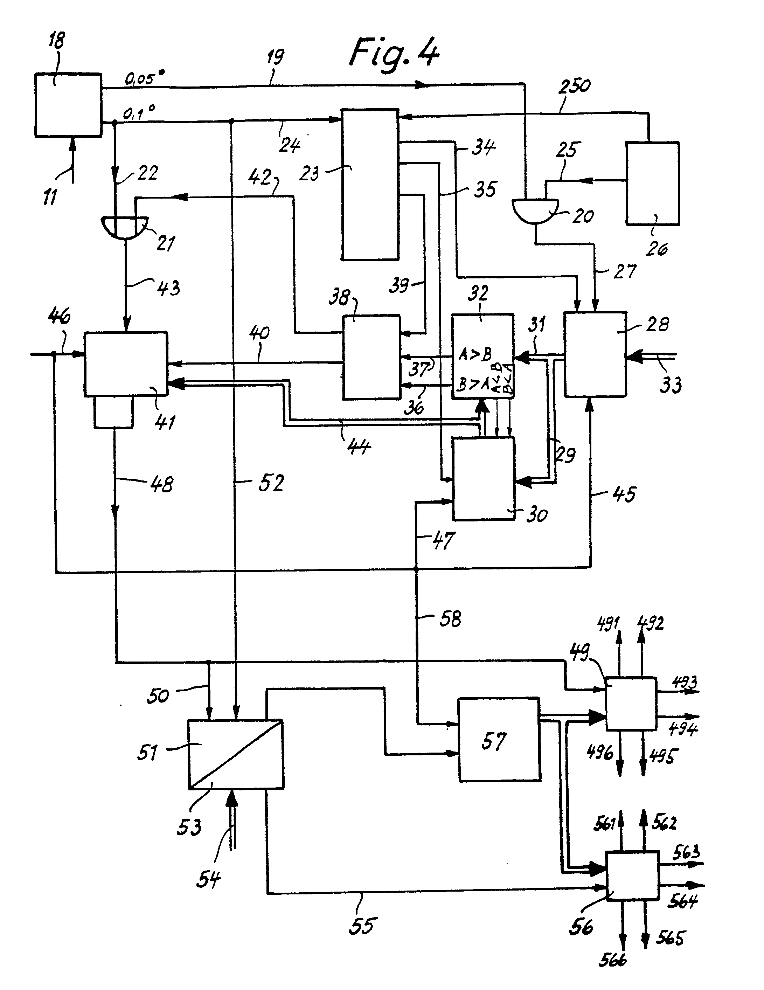

In Fig. 3 ist eine erfindungsgemäße Verzögerungseinrichtung eines elektromagnetischen Steuerventils 7 dargestellt. Die erfindungsgemäße Verzögerungseinrichtung weist ein erstes Verzögerungsglied 12 mit konstanter Verzögerungszeit, die bevorzugt 2,56 ms beträgt, ein zweites Verzögerungsglied 13 mit veränderbarer Verzögerungszeit, einen Leistungsschalter 14a, eine Einrichtung 15 mit einer Aufbereitungseinheit 14b zum Erkennen der Ankerbewegung des Steuerventils 7, die beispielsweise aus einem Permanentmagneten, einer Induktionsspule und dazugehörigen Polschuhen bestehen kann und in an sich bekannter Weise aufgrund der Änderung eines magnetischen Widerstandes Steuersignale erzeugt, und einen Phasendiskriminator als Vergleicher 16 auf. Der Steuerimpuls der Meßwertverarbeitungseinrichtung, der durch die in Fig. 4 gezeigte Schaltungsanordnung erfindungsgemäß drehzahlabhängig an die konstante Verzögerungszeit angeglichen ist, wird über eine bistabile Kippstufe 17 einerseits dem ersten Verzögerungsglied 12 und andererseits dem zweiten Verzögerungsglied 13 zugeführt. Das Verzögerungsglied 12 liefert nach einer konstanten Verzögerungszeit von 2,56 ms ein Ausgangssignal zu dem Phasendiskriminator 16. Über das zweite Verzögerungsglied 13 und den Leistungsschalter 14a wird der Steuerimpuls der Meßwertverarbeitungseinrichtung dem elektromagnetischen Steuerventil 7 zugeführt. Nach einer ventilspezifischen Verzögerungszeit reagiert das Steuerventil 7 auf den Steuerimpuls der Meßwertverarbeitungseinrichtung 8, wobei durch die Ankerbewegung des elektromagnetischen Ventils 7 ein Ausgangssignal erzeugt ist, das über die Aufbereitungseinheit 14b als Istwert dem Phasendiskriminator 16 zugeführt ist. Der Phasendiskriminator 16, der in Zusammenhang mit der Beschreibung von Fig. 5 noch näher erläutert wird, vergleicht den Istwert der Einrichtung 15 mit dem Ausgangssignal des ersten Verzögerungsgliedes 12 als Sollwert und liefert in Abhängigkeit des Sollwert/Istwertvergleiches eine Steuergröße, die das zweite Verzögerungsglied 13 derart regelt, daß der Istwert des elektromagnetischen Steuerventils 7 und das Ausgangssignal des Verzögerungsgliedes 12 koinzident am Phasendiskriminator 16 anliegen, so daß der Steuerimpuls der Meßwertverarbeitungseinrichtung 8 mit einer konstanten Zeitverzögerung auf das elektromagnetische Steuerventil 7 übertragen wird.

In Fig. 4 ist eine Schaltung dargestellt, die die konstante Verzögerungszeit des elektromagnetischen Steuerventils 7 in Abhängigkeit der Istdrehzahl der Brennkraftmaschine darstellt und die den von der elektrisch arbeitenden Meßwertverarbeitungseinrichtung ermittelten Ansteuerzeitpunkt des Steuerventils im Öffnungs- und/oder Schließsinn in Abhängigkeit der konstanten Verzögerungszeit des Steuerventils verändert. Mit 18 ist ein Frequenzvervielfacher bezeichnet, dem die von dem Sensor 10 (Fig. 1) ermittelten Impulsfolgen über die Leitung 11 zugeführt werden. In dem Frequenzvervielfacher 18 werden die Impulsfolgen einerseits verzwanzigfacht, die somit als 0,05°- Kurbelwellenwinkelbereichsimpulse über eine Leitung 19 einem Und-Gatter 20 zugeführt werden, und andererseits verzehnfacht, die somit als 0,1°-Kurbelwellenwinkelbereichsimpulse einem Oder-Gatter 21 über eine Leitung 22 und einer Ablaufsteuerung 23 über eine Leitung 24 zugeführt werden. Die Ablaufsteuerung 23 ist über die Leitung 250 außerdem mit einer Schaltstufe 26 verbunden. Das Und-Gatter 20 wird über eine Leitung 25 von der mit einem Zeitgeber versehenen Schaltstufe 26 beherrscht, wobei der Zeitgeber der Schaltstufe 26 auf die konstante Verzögerungszeit des ersten Verzögerungsgliedes 12 (Fig. 3) und auf die unterschiedliche Frequenzvervielfachung innerhalb des Frequenzvervielfachers 18 abgestimmt ist. Im vorliegenden Beispiel, in dem die konstante Verzögerungszeit 2,56 ms beträgt und die dem Und-Gatter 20 zugeführten Impulse verzwanzigfacht werden, ist det Zeitgeber auf die halbe konstante Verzögerungszeit von 1,28 ms ausgelegt. Über das Und-Gatter 20 werden die 0,05°-Kurbelwellenwinkelbereichsimpulse über eine Leitung 27 einem ersten Zähler 28 zugeführt, der während der Einschaltzeit von 1,28 ms fortlaufend die 0,05°-Impulse ermittelt. Mit dem Ausgang des ersten Zählers 28 ist über eine 10-Bit-Datenleitung 29 ein Speicher 30 und über eine weitere 10-Bit-Datenleitung 31 ein Komparator 32 verbunden. Ferner liegt an dem ersten Zähler 28 über einen 8-Bit-Eingang 33 eine von der elektrisch arbeitenden Meßwertverarbeitungseinrichtung 8 ermittelte Sollgröße für den Spritzbeginn an. Weiterhin ist ein Ausgang 34 der Ablaufsteuerung 23, die über die Leitung 24 mit 0,1°- Kurbelwellenwinkelbereichsimpulsen von dem Frequenzvervielfacher 18 synchronisiert wird, mit dem ersten Zähler 28 und über einen Ausgang 35 mit dem Speicher 30 verbunden. Dem Komparator 32 ist über Verbindungen 36 und 37 eine Torschaltung 38 zugeordnet, an der ebenfalls ein Eingangssignal 39 der Ablaufsteuerung 23 anliegt. Ausgangsseitig ist die Torschaltung 38 über eine Leitung 40 mit einem zweiten Zähler 41 und über eine Leitung 42 mit dem Oder-Gatter 21 verbunden. Der zweite Zähler 41 ist über die Leitung 43 mit dem Oder-Gatter 21 und somit mit dem Frequenzvervielfacher 18 und über eine 10-Bit-Datenleitung 44 mit dem Speicher 30 verbunden und ermittelt fortlaufend 0,1°- Kurbelwellenwinkelimpulszählintervalle, die durch einen festvorgebbaren Maximalwert begrenzt sind. An dem ersten Zähler 28, an dem zweiten Zähler 41 und an dem Speicher 30 liegt eingangsseitig ferner über Leitungen 45, 46, 47 das durch die Synchronmarke auf dem Schwungrad 3 in der Sensorvorrichtung 10 erzeugte Synchronsteuersignal an.

Während der durch das Schaltstufe 26 bestimmen Einschaltzeit von 1,28 ms des ersten Zählers 28 werden die 0,05°- Kurbelwellenwinkelimpulse gezählt. Über die 8- Bit-Datenleitung 33 wird die Sollgröße für den Spritzbeginn der elektrisch arbeitenden Meßwertverarbeitungseinrichtung 8 vor jedem Zählvorgang in den ersten Zähler 28 gesetzt und das während der Einschaltdauer ermittelte Zählergebnis hinzuaddiert und die Summe in dem Speicher 30 abgespeichert. Die Meßgröße der nächstfolgenden Zählung und der Speicherinhalt werden in dem Komparator 32 verglichen, und der Inhalt des Speichers 30 in Abhängigkeit des Vergleichsergebnisses über die Verbindung mit dem Komparator 32 und die Leitung 35 mit einem entsprechenden Korrekturimpuls beaufschlagt, wobei aufgrund des sehr schnellen Zählrhythmusses die in dem Komparator anliegende Vergleichsdifferenz maximal 1 Kurbelwellenwinkelimpuls beträgt und wobei über die Ablaufsteuerung 23 der Korrekturimpuls in die Lücke zwischen zwei 0,1°-Kurbelwellenwinkelimpulse gesetzt wird. Die Korrektur über den Komparator 32 und die Torschaltung 38 erfolgt fortlaufend. Außerdem wird der Speicher 30 durch den in dem Sensor 10 hervorgerufenen und über die Leitung 47 übertragenen Synchronimpuls auf die aktuelle Meßgröße des Zählers 28 gesetzt. Der zweite Zähler zählt parallel zum ersten Zähler 28 die von dem Frequenzvervielfacher 18 erzeugten 0,1°-Kurbelwellenwinkelimpulse in fortlaufenden Zählintervallen, die bei der vorliegenden Sechszylinderbrennkraftmaschine 1 durch den vorgegebenen Maximalwert von 1.200 Zählimpulsen entsprechend 120° Zündwinkelbereich begrenzt sind. Liegt an dem Eingang 46 des zweiten Zählers 41 das den Beginn des Arbeitstaktes der Brennkraftmaschine 1 kennzeichnende Synchronimpulssignal an, so wird über die 10-Bit-Datenleitung 44 der Inhalt des Speichers 30 in den zweiten Zähler 41 gesetzt, so daß der zweite Zähler 41 den fest vorgegebenen Wert von 120°-Kurbelwellenwinkelbereich entsprechend früher erreicht. Während des Arbeitstaktes der Brennkraftmaschine 1 werden die die Änderungen der Istdrehzahl der Brennkraftmaschine 1 kennzeichnenden Korrekturimpulse über die Torschaltung 38 und das Oder-Gatter 21 ebenfalls dem zweiten Zähler 41 zugeführt, wobei durch die Ablaufsteuerung 23 sichergestellt ist, daß diese Korrekturimpulse in die Lücke zwischen zwei 0,1°-Kurbelwellenwinkelimpulse gesetzt werden. Über die Leitung 40 wird dem Zähler 41 vorgegeben, ob der jeweilige Korrekturimpuls zum Zählerstand addiert oder von diesem subtrahiert wird. Bei Erreichen des fest vorgegebenen Maximalwertes jedes Zählintervalles erzeugt der zweite Zähler 41 einen Steuerimpuls für den Spritzbeginn, der einem Decoder 49 zugeführt wird. Der Decoder 49 übermittelt den Spritzbeginnimpuls an die bistabilen Kippstufen 17 der einzelnen Verzögerungseinrichtungen der elektromagnetischen Steuerventile 7 der Zylindereinheiten 2 über Ausgänge 491, 492, 493, 494, 495, 496.

Über eine Leitung 50 ist ein dritter Zähler 51 mit dem Ausgang 48 des zweiten Zählers 41 und über eine Leitung 52 mit dem Ausgang 24 des Frequenzvervielfachers 18 verbunden, somit daß der dritte Zähler ebenfalls die von dem Frequenzvervielfacher 18 erzeugten 0,1°-Kurbelwellenwinkelimpulse zählt. An dem dritten Zähler 51 ist eine digitale Vergleichseinrichtung 53 vorgesehen, die über einen 8-Bit-Eingang 54 mit der elektrischen Meßwertverarbeitungseinrichtung 8 in Verbindung steht. Erreicht die von dem dritten Zähler 51 die in die Vergleichseinrichtung 53 eingegebene Sollgröße für die Spritzdauer, so erzeugt die Vergleichseinrichtung 53 einen Steuerimpuls für das Spritzende, der über einen Ausgang 55 einem zweiten Decoder 56 zugeführt wird, der die Kippstufen 17 der einzelnen Verzögerungseinrichtungen der jeweiligen elektromagnetischen Steuerventile 7 der Zylindereinheiten 2 im Schließsinne über Leitungen 561, 562, 563, 564, 565, 566 ansteuert, wobei der Decoder 49 für den Spritzbeginn und der Decoder 56 für das Spritzende von einem Zylinderzähler 57 angesteuert sind, der über einen Eingang 58 durch den in der Sensorvorrichtung 10 (Fig. 1) erzeugten Synchronimpuls synchronisiert ist. Der Zylinderzähler 57 ist über eine Leitung 59 mit der dritten Zähler 51 verbunden und wird nach dem Steuerimpuls der Vergleichseinrichtung 53 durch einen entsprechenden Schaltimpuls weitergesetzt.

In Fig. 5 ist der als Vergleicher eingesetzte Phasendiskriminator 16 (Fig. 3) der einzelnen Verzögerungseinrichtungen der Steuerventile 7 näher erläutert. An einer NAND-Verknüpfung 59 und einer NOR-Verknüpfung 60 liegen jeweils eingangsseitig die von der ersten Verzögerungseinrichtung 12 übertragenen Steuersignale $U_{Ref}$ und die über die Einrichtung 15 zur Erkennung der Ankerbewegung des elektromagnetischen Steuerventils 7 erzeugten Rückmeldesignale $U_{Rückm}$. Durch die positiven Flanken von $U_{Ref}$ und die negativen Flanken von $U_{Rückm}$ werden an den Ausgängen A und B bei Eintreffen des Rückmeldesignals vor Ablauf der konstanten Verzögerungszeit (im vorliegenden Fall 2,56 ms) "High-Impulse" und bei Eintreffen des Rückmeldesignals nach Ablauf der konstanten Verzögerungszeit "Low-Impulse" gebildet. Durch die Zeitdifferenz der beiden Eingangssignale wird die zeitliche Breite der Impulse beeinflußt. Über Gleichrichter 61 und 62 und einen Widerstand 63 werden die Impulse einem Kondensator 64 zugeführt, der je nach Richtung ("High" oder "Low") und Impulsbreite (Zeitdauer) eine Ladespannung bildet. Diese Ladespannung regelt als Steuergröße das Zweite Verzögerungsglied 13 mit der veränderbaren Verzögerungszeit.

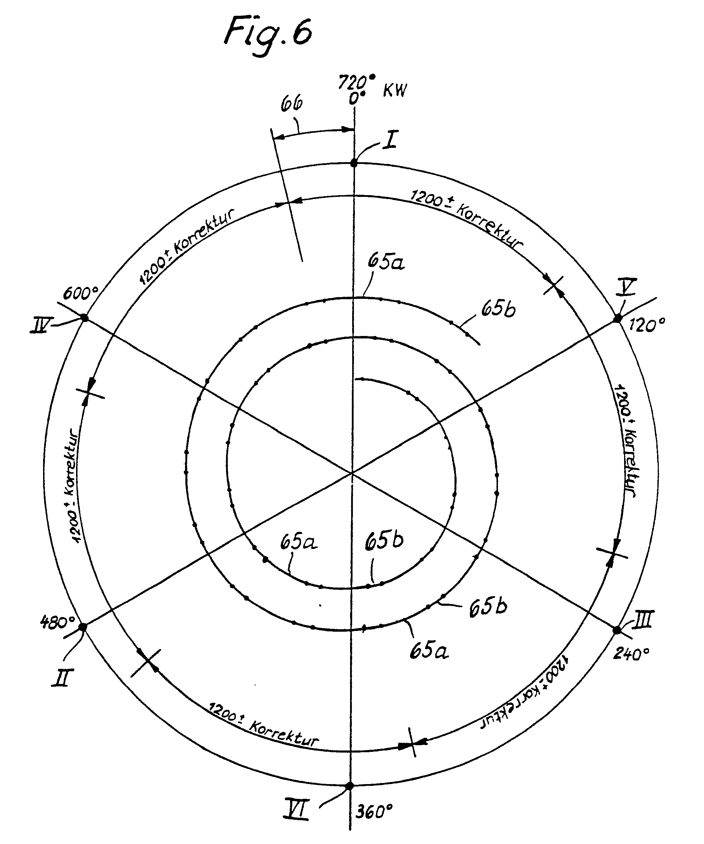

In Fig. 6 ist ein Ablaufdiagramm eines Arbeitstaktes der Hubkolbenbrennkraftmaschine 1 dargestellt, wobei mit I bis VI die inneren Totpunkte der Zylindereinheiten 2 in der Zündfolge 1-5-3-6-2-4 in Abhängigkeit des Kurbelwellenwinkels gekennzeichnet sind, die jeweils einen Zündabstand von 120°-Kurbelwellenwinkel haben. Auf der inneren Spirale des Ablaufdiagrammes sind schematisch mit 65a die 1,28 ms-Einschaltzeiten der ersten Zählvorrichtung 28 zur Ermittlung der 0,05°-Kurbelwellenwinkelimpulse und mit 65b die Zeitintervalle angedeutet, in denen der Speicher 30 und der zweite Zähler 41 über den Komparator 32 und die Torschaltung 38 entsprechend der von dem ersten Zähler 28 ermittelten Istdrehzahl der Hubkolbenbrennkraftmaschine 1 korrigiert werden und wobei die Korrekturimpulse durch die Ablaufsteuerung 23 in die Lücke von zwei aufeinanderfolgenden 0,1°-Kurbelwellenwinkelimpulse gesetzt werden. Der die Zählintervalle des zweiten Zählers 41 begrenzende Maximalwert ist entsprechend des Zündabstandes auf 1200 festgesetzt. Mit 66 ist der Kurbelwellenwinkelbereich gekennzeichnet, der bei einer vorgegebenen Istdrehzahl der Brennkraftmaschine der konstanten Verzögerungszeit der Verzögerungseinrichtung von 2,56 ms entspricht und von dem ersten Zähler 28 ermittelt worden ist und über den Synchronimpuls in den zweiten Zähler 41 setzbar ist. Hierbei ist ferner eine von der elektrischen Meßwertverarbeitungseinrichtung 8 bestimmte Sollgröße für den Spritzbeginn berücksichtigt, so daß bei Erreichen des den Einspritzbeginnsteuerimpuls auslösenden Maximalwertes des zweiten Zählers das elektromagnetische Steuerventil 7 exakt öffnet, wobei Veränderungen der Istdrehzahl der Hubkolbenbrennkraftmaschine 1 während des Arbeitstaktes der Hubkolbenbrennkraftmaschine durch eine mittels der Korrekturimpulse hervorgerufene positive bzw. negative Korrektur berücksichtigt ist.

**Patentansprüche**

1. Kraftstoffeinspritzvorrichtung für eine mehrzylindrige, luftverdichtende, selbstzündende Hubkolbenbrennkraftmaschine mit einer Kraftstoffeinspritzpumpe und je einer Einspritzdüse (6) für jede Zylindereinheit, wobei auf der Hochdruckseite der Kraftstoffeinspritzpumpe zu jeder Einspritzdüse je ein elektromagnetisch ansteuerbares Steuerventil (7) zur Steuerung mindestens des Einspritzbeginns angeordnet ist, wobei jedes Steuerventil in Abhängigkeit von charakteristischen Einflußgrößen der Brennkraftmaschine von einer Meßwertverarbeitungseinrichtung (8) mit einem Steuerimpuls angesteuert ist, gekennzeichnet durch folgende Merkmale:
a) zwischen der Meßwertverarbeitungseinrichtung (8) und jedem Steuerventil (7) ist je eine Verzögerungseinrichtung aus zwei Verzögerungsgliedern (12, 13) angeordnet;
b) der von der Meßwertverarbeitungseinrichtung (8) jeder Verzögerungseinrichtung zugeführte Steuerimpuls ist über ein erstes Verzögerungsglied (12) mit fester Verzögerungszeit (Referenzzeit) einem Vergleicher (16) zugeführt;
c) der Steuerimpuls ist ferner über ein zweites Verzögerungsglied (13) mit veränderbarer Verzögerungszeit dem zugeordneten Steuerventil (7) zugeführt;
d) es ist jeweils eine Einrichtung (15) zum Erfassen der Ankerbewegung jedes Steuerventils vorgesehen, wobei das Ausgangssignal der Einrichtung dem zugeordneten Vergleicher (16) zugeführt ist;
e) der Vergleicher (16) stellt in Abhängigkeit der fest vorgegebenen Verzögerungszeit des ersten Verzögerungsgliedes (12) und der Antwortzeit des zugeordneten Steuerventils (7) die veränderbare Verzögerungszeit des zweiten Verzögerungsgliedes (13) derart ein, daß die Summe aus der eingestellten Verzögerungszeit des zweiten Verzögerungsgliedes (13) und der Antwortzeit des zugeordneten Steuerventils (7) der festen Verzögerungszeit (Referenzzeit) des ersten Verzögerungsgliedes (12) entspricht.

2. Kraftstoffeinspritzvorrichtung nach Anspruch 1,
dadurch gekennzeichnet, daß die konstante Verzögerungszeit des ersten Verzögerungsgliedes (12) 2,56 ms beträgt.

3. Kraftstoffeinspritzvorrichtung nach Anspruch 1 oder 2,
dadurch gekennzeichnet, daß ein von der Istdrehzahl der Brennkraftmaschine (1) direkt abhängiges Brennkraftmaschinenbauteil mit Geber (9) versehen ist, die in einem Sensor (10) von der Istdrehzahl der Brennkraftmaschine (1) abhängige Impulsfolgen erzeugen, die einem ersten und einem zweiten Zähler (28, 41) zugeführt sind.

4. Kraftstoffeinspritzvorrichtung nach Anspruch 3,
dadurch gekennzeichnet, daß die Geber (9) an der Kurbelwelle oder dem Schwungrad (3) der Brennkraftmaschine (1) vorgesehen sind.

5. Kraftstoffeinspritzvorrichtung nach Anspruch 3 oder 4,
dadurch gekennzeichnet, daß die im Sensor (10) erzeugten Impulse im ersten und zweiten Zähler (28, 41) in eine die Istdrehzahl der Brennkraftmaschine (1) kennzeichnende Meßgröße umgewandelt sind.

6. Kraftstoffeinspritzvorrichtung nach einem der Ansprüche 3 bis 5,
dadurch gekennzeichnet, daß die Geber (9) mit einer 1°-Winkelteilung auf dem Schwungrad (3) oder der Kurbelwelle angeordnet sind.

7. Kraftstoffeinspritzvorrichtung nach einem der Ansprüche 3 bis 6,
dadurch gekennzeichnet, daß die von den Gebern (9) in dem Sensor (10) erzeugten Impulse über einen Frequenzvervielfacher (18) dem ersten und zweiten Zähler (28, 41) zugeführt sind.

8. Kraftstoffeinspritzvorrichtung nach einem der Ansprüche 3 bis 7,

dadurch gekennzeichnet, daß eine den ersten Zähler (28) ein- und ausschaltende Schaltstufe (26) vorgesehen ist.

9. Kraftstoffeinspritzvorrichtung nach Anspruch 8,

dadurch gekennzeichnet, daß die Schaltstufe (26) von einem Zeitgeber in Abhängigkeit der festen Verzögerungszeit (Referenzzeit) des ersten Verzögerungsgliedes (12) steuerbar ist.

10. Kraftstoffeinspritzvorrichtung nach einem der Ansprüche 3 bis 9,

dadurch gekennzeichnet, daß der erste Zähler (28) und der zweite Zähler (41) miteinander verbunden sind.

11. Kraftstoffeinspritzvorrichtung nach einem der Ansprüche 3 bis 10,

dadurch gekennzeichnet, daß die von dem ersten Zähler (28) erfaßte Meßgröße in einem Speicher (30) speicherbar ist.

12. Kraftstoffeinspritzvorrichtung nach Anspruch 11,

dadurch gekennzeichnet, daß der erste Zähler (28) auf eine von der Meßwertverarbeitungseinrichtung (8) ermittelte Sollgröße für den Spritzbeginn setzbar ist, wobei die Sollgröße und die von dem ersten Zähler (28) ermittelte Meßgröße addiert werden und die Summe in den Speicher (30) des ersten Zählers (28) übertragbar ist.

13. Kraftstoffeinspritzvorrichtung nach einem der Ansprüche 3 bis 12,

dadurch gekennzeichnet, daß der zweite Zähler (41) fortlaufend Zählintervalle ermittelt, die durch einen fest vorgegebenen Maximalwert begrenzt sind.

14. Kraftstoffeinspritzvorrichtung nach einem der Ansprüche 3 bis 13,

dadurch gekennzeichnet, daß an dem Schwungrad (3) oder der Kurbelwelle der Brennkraftmaschine ein Synchronimpulsgeber ɔrgesehen ist, der in einem Sensor (10) einen ⸗en Beginn des Arbeitstaktes der Brennkraftmaschine (1) kennzeichnenden Synchronimpuls erzeugt.

15. Kraftstoffeinspritzvorrichtung nach den Ansprüchen 11, 12 und 14,

dadurch gekennzeichnet, daß der zweite Zähler (41) mit dem Speicher (30) des ersten Zählers (28) verbunden ist, wobei durch den Synchronimpuls der zweite Zähler (41) auf den Speicherinhalt setzbar ist.

16. Kraftstoffeinspritzvorrichtung nach Anspruch 13 und 14,

dadurch gekennzeichnet, daß der fest vorgebbare Maximalwert dem Zündwinkel der in der Zündfolge dem Synchronimpuls nachfolgenden Zylindereinheit (2) der Brennkraftmaschine (1) zugeordnet ist.

17. Kraftstoffeinspritzvorrichtung nach einem der Ansprüche 3 bis 16, dadurch gekennzeichnet, daß ein Komparator (32) vorgesehen ist, der den Speicherinhalt und jede von dem ersten Zähler (28) erfaßte Meßgröße vergleicht und.in Abhängigkeit des Vergleichsergebnisses den Speicherinhalt und den Inhalt des zweiten Zählers (41) korrigiert, wobei die Korrektur zwischen zwei Zählimpulsen des zweiten Zählers (41) erfolgt.

18. Kraftstoffeinspritzvorrichtung nach den Ansprüchen 7, 9 und 11,

dadurch gekennzeichnet, daß die Schaltstufe (26) von dem Zeitgeber mit der halben konstanten Verzögerungzeit des ersten Verzögerungsgliedes (12) gesteuert ist und von dem Frequenzvervielfacher (18) die dem ersten Zähler (28) zugeführten Impulse verzwanzigfacht und die dem zweiten Zähler (41) zugeführten Impulse verzehnfacht werden.

19. Kraftstoffeinspritzvorrichtung nach einem der Ansprüche 3 bis 18,

dadurch gekennzeichnet, daß der zweite Zähler (41) bei Erreichen des fest vorgegebenen Maximalwerte jedes Zählintervalls einen Steuerimpuls für den Einspritzbeginn erzeugt, der dem ersten und dem zweiten Verzögerungsglied (12, 13) zugeführt ist.

20. Kraftstoffeinspritzvorrichtung nach einem der Ansprüche 3 bis 19,

dadurch gekennzeichnet, daß ein dritter Zähler (51) vorgesehen ist, dem das Ausgangssignal des Frequenzvervielfachers (18) für den zweiten Zähler (41) zugeführt ist.

21. Kraftstoffeinspritzvorrichtung nach Anspruch 20,

dadurch gekennzeichnet, daß der dritte Zähler (51) durch den bei Erreichen des Maximalwertes erzeugten Steuerimpuls des zweiten Zählers (41) eingeschaltet wird.

22. Kraftstoffeinspritzvorrichtung nach Anspruch 20 oder 21,

dadurch gekennzeichnet, daß eine Vergleichseinrichtung (53) vorgesehen ist, die mit einer von der Meßwertverarbeitungseinrichtung (8) ermittelten Sollgröße für die Spritzdauer setzbar ist und mit dem Einschalten des dritten Zählers (51) mit diesem verbunden wird und bei Erreichen der von dem dritten Zähler (51) ermittelten Zählgröße und der Sollgröße für die Spritzdauer einen Steuerimpuls für das Spritzende erzeugt, der dem ersten und dem zweiten Verzögerungsglied (12, 13) zugeführt ist.

**Claims** .

1. A fuel injection system for a multi-cylinder, air-compressing, auto-ignition reciprocating-piston internal combustion engine, the system comprising a fuel injection pump and a separate injection nozzle (6) for each cylinder unit, in which an electromagnetically controllable pilot valve (7) serving to control at least the start of injection is arranged between the delivery side of the fuel injection pump and each injection nozzle, and in which each pilot valve is arranged to be controlled in dependence on characteristic actuating variables of the internal combustion engine by a control impulse of a data processing device (8),

characterized by the following features:

a) retarding means comprising two delay elements (12, 13) are arranged between the data processing device (8) and each pilot valve (7);

b) the control impulse transmitted by the data processing device (8) to each retarding means is arranged to be fed via the first one (12) of the delay elements, which is set to operate at a constant time delay (reference time), to a comparator (16);

c) the control impulse is arranged to be fed also via the second one (13) of the delay elements, which is operable at a variable time delay, to the respective pilot valve (7);

d) a separate appliance (15) associated with each pilot valve serves to detect the travel of the valve's armature, and the appliance's output signal is arranged to be fed to the respective comparator (16);

e) the comparator (16) is arranged to adjust - in dependence on the constant time delay of the first delay element (12) and on the response time of the respective pilot valve (7) - the variable time delay of the second delay element (13) in such a way that the total of the adjusted time delay of the second delay element (13) and of the response time of the respective pilot valve (7) corresponds to the constant time delay (reference time) of the first delay element (12).

2. A fuel injection system according to claim 1, characterized in that the constant time delay of the first delay element (12) is 2.56 ms.

3. A fuel injection system according to claim 1 or claim 2, characterized in that an engine component directly controlled by the actual rotational speed of the internal combustion engine (1) is provided with transmitters (9) which in dependence on the engine's (1) actual rotational speed generate in a sensor (10) impulse sequences arranged to be fed to a first and a second meter (28, 41).

4. A fuel injection system according to claim 3, characterized in that the transmitters (9) are provided on the crankshaft or on the flywheel (3) of the internal combustion engine (1).

5. A fuel injection system according to claim 3 or claim 4, characterized in that the impulses generated in the sensor (10) are converted in the first and the second meter (28, 41) into a measured variable denoting the actual rotational speed of the engine (1).

6. A fuel injection system according to any of the claims 3 to 5, characterized in that the transmitters (9) are arranged at an angular pitch of 10 on the flywheel (3) or the crankshaft.

7. A fuel injection system according to any of the claims 3 to 6, characterized in that the impulses generated by the transmitters (9) in the sensor (10) are fed via a frequency multiplier (18) to the first and the second meter (28, 41).

8. A fuel injection system according to any of the claims 3 to 7, characterized in that a contact controller (26) for connecting and disconnecting the first meter (28) is provided.

9. A fuel injection system according to claim 8, characterized in that the contact controller (26) is arranged to be controlled by a timer in dependence on the constant time delay (reference time) of the first delay element (12).

10. A fuel injection system according to any of the claims 3 to 9, characterized in that the first meter (28) and the second meter (41) are connected to one another.

11. A fuel injection system according to any of the claims 3 to 10, characterized in that the measured variable ascertained by the first timer (28) is storable in a memory (30).

12. A fuel injection system according to claim 11, characterized in that the first meter (28) is adjustable to a set point - determined by the data processing device (8) - for the start of injection, and in that the set point and the measured variable ascertained by the first meter (28) are added and the resulting total is transmittable to the memory of the first meter (28).

13. A fuel injection system according to any of the claims 3 to 12, characterized in that the second meter (41) is arranged to continuously ascertain metering intervals which are limited by a predetermined maximum value.

14. A fuel injection system according to any of the claims 3 to 13, characterized in that a synchronizing-impulse generator is provided on the flywheel (3) or the crankshaft of the internal combustion engine and serves to generate in the sensor (10) a synchronizing impulse denoting the start of the engine's (1) power stroke.

15. A fuel injection system according to claims 11, 12 and 14, characterized in that the second meter (41) is connected to the memory (30) of the first meter (28), and in that the second meter (41) is adjustable by the synchronizing impulse to the content of the memory.

16. A fuel injection system according to claim 13 and claim 14, characterized in that the predeterminable maximum value is allocated to the ignition angle of that of the engine's (1) cylinder units (2) that, according to the ignition order, follows the synchronizing impulse.

17. A fuel injection system according to any of the claims 3 to 16, characterized in that a further comparator (32) is provided and serves to compare the memory content and each measured variable ascertained by the first meter (28) and, in dependence on the result of this comparison, to correct the content of the memory and that of the second meter, and in that this correction is effected between two metering impulses of the second meter (41).

18. A fuel injection system according to the claims 7, 9 and 11,

characterized in that the contact controller (26) is controlled by the timer at one half of the first delay element's (12) constant time delay, and in that the impulses fed by the frequency multiplier (18) to the first meter (28) are multiplied by twenty and those fed to the second meter (41) by ten.

19. A fuel injection system according to any of the claims 3 to 18,

characterized in that the second meter (41) upon reaching the predetermined maximum value of each metering interval generates a control impulse for the start of injection, and in that this impulse is fed to the first and the second delay element (12, 13).

20. A fuel injection system according to any of the claims 3 to 19,

characterized in that a third meter (51) is provided, and in that the frequency multiplier's (18) output signal for the second meter (41) is transmitted to this third meter.

21. A fuel injection system according to claim 20,

characterized in that the third meter (51) is connected to the circuit by the control impulse generated by the second meter (41) when the maximum value has been reached.

22. A fuel injection system according to claim 20 or claim 21,

characterized in that a third comparator (53) is provided which is adjustable to a set point ascertained by the data processing device (8) for determining the duration of injection, that the third comparator, after the third meter (51) has been connected, is connected thereto and generates - upon reaching the measured variable ascertained by the third meter (51) and the set point for the duration of injection - a control impulse for the termination of injection, and in that this control impulse is fed to the first and the second delay element (12, 13).


**Revendications**

1. Dispositif d'injection de carburant pour un moteur à combustion interne polycylindrique, avec pistons élevateurs, à auto-allumage, avec compression d'air, pourvu d'une pompe d'injection de carburant et pour chaque unité de cylindres, d'un injecteur (6) pour chacun de ces injecteurs une soupape de commande (7), s'actionnant par voie électromagnétique, étant montée sur le côté haute pression de la pompe d'injection de carburant pour commander au moins le début de l'injection, chaque soupape de commande étant actionnée, en fonction de grandeurs d'influence, caractéristiques du moteur à combustion interne, par une impulsion de commande provenant d'un dispositif (8) de traitement de valeur de mesure, dispositif d'injection de carburant caractérisé en ce que

a) Entre le dispositif (8) de traitement de valeur de mesure et chaque soupape de commande (7) est monté chaque fois un dispositif de retardement composé de deux organes de retardement (12, 13).

b) L'impulsion de commande envoyée à chaque dispositif de retardement par le dispositif (8) de traitement de valeur de mesure est envoyée par l'intermédiaire d'un premier organe de retardement (12) avec temps de retard fixé (temps de référence) à un comparateur (16).

c) L'impulsion de commande est envoyée en outre par l'intermédiaire d'un second organe de retardement (13) avec temps de retard variable à la soupape de commande (7) afférente.

d) Il est prévu chaque fois un dispositif (15) pour détecter le mouvement d'enduit de chaque soupape de commande, le signal de sortie de ce dispositif étant envoyé au comparateur (16) afférent.

e) Le comparateur (16) en fonction du temps de retard prédéterminé de façon fixe du premier organe de retardement (12) et du temps de réponse de la soupape de commande (7) afférente, régle le temps de retard variable du second organe de retardement (13) de telle manière, que la somme du temps de retard réglé du second organe de retardement (13) et du temps de réponse de la soupape de commande (7) afférente correspond au temps de retard fixe (temps de référence) du premier organe de retardement (12).

2. Dispositif d'injection de carburant selon la revendication 1, car en ce que le temps de retard constant du premier organe de retardement (12) est de 2,56 ms.

3. Dispositif d'injection selon la revendication 1 ou 2, en ce qu'un élément de construction du moteur à combustion interne dépendant directement de la vitesse de rotation de ce moteur (1) est pourvu de transmetteurs (9), qui produisent dans un détecteur (10) des séries d'impulsions fonction de la vitesse de rotation effective du moteur à combustion interne (1), et qui sont envoyées à un premier et à un deuxième compteur (28, 41).

4. Dispositif d'injection selon la revendication 3, en ce que les transmetteurs (9) sont prévus sur le vilebrequin ou le volant (3) du moteur à combustion interne (1).

5. Dispositif d'injection selon la revendication 3 ou 4, car en ce que les impulsions produites dans le détecteur (10) sont converties dans le premier et le deuxième compteur (28, 41) en une grandeur de mesure caractérisant la vitesse de rotation effective du moteur à combustion interne (1).

6. Dispositif selon l'une des revendication 3 à 5, car en ce que les transmetteurs (9) sont disposés sur le volant (3) ou le vilebrequin avec une subdivision d'angle de 1°.

7. Dispositif d'injection selon l'une des revendication 3 à 6, car en ce que les impulsions produites par les transmetteurs (9) dans le détecteur (10) sont envoyés au premier et au deuxième compteur (28, 41) par l'intermédiaire d'un multiplicateur de fréquence (18).

8. Dispositif d'injection selon l'une des revendication 3 à 7, car en ce qu'il est prévu un plot de commutation (26) mettant en circuit et hors circuit le premier compteur (28).

9. Dispositif d'injection selon la revendication 8, car en ce que le plot de commutation (26) peut être commandé par un générateur de rythme en fonction du temps de retard fixe (temps de référence) du premier organe de retardement (12).

10. Dispositif d'injection selon l'une des revendication 3 à 9, car en ce que le premier compteur (28) et le deuxième compteur (41) sont reliés l'un à l'autre.

11. Dispositif d'injection selon l'une des revendication 3 à 10, car en ce que la grandeur mesurée captée par le premier compteur (28) peut s'enregistrer dans une mémoire (30).

12. Dispositif d'injection selon la revendication 11, car en ce que le premier compteur (28) peut être mis sur une grandeur prescrite pour le début de l'injection, déterminée par le dispositif (8) de traitement de valeur de mesure, cette grandeur prescrite et la grandeur de mesure déterminée par le premier compteur (28) étant additionnées et la somme pouvant être transmise dans la mémoire (30) du premier compteur (28).

13. Dispositif d'injection selon l'une des revendication 3 à 12, car en ce que le deuxième compteur (41) détermine de façon continue des intervalles de comptage, qui sont limités par une valeur maximale prédéterminée de façon fixe.

14. Dispositif d'injection selon l'une des revendication 3 à 13, car en ce qu'il est prévu sur le volant (3) ou le vilebrequin du moteur à combustion interne un générateur d'impulsion synchrones, qui produit dans un détecteur (10) l'impulsion synchrone caractérisant le début du cycle de travail du moteur à combustion interne (1).

15. Dispositif d'injection selon les revendications 11, 12, et 14, car en ce que le deuxième compteur (41) est relié à la mémoire (30) du premier compteur (28), ce deuxième compteur (41) pouvant être mis sur le contenu de la mémoire sous l'effet de l'impulsion synchrone.

16. Dispositif d'injection selon la revendication 13 et 14, car en ce que la valeur maximale pouvant être prédéterminée de façon fixe est associée à l'angle d'amorçage de l'unité de cylindres (2) du moteur à combustion interne (1), qui suit l'impulsion synchrone dans l'ordre d'allumage.

17. Dispositif d'injection selon l'une des revendications 3 à 16 car en ce qu'il est prévu un comparateur (32), qui compare le contenu de la mémoire et chaque grandeur mesurée captée par le premier compteur (28) et, en fonction du résultat de la comparaison, corrige le contenu de la mémoire et le contenu du deuxième compteur (41), la correction s'effectuant entre le deuxième compteur (41).

18. Dispositif d'injection selon les revendications 7, 9, et 11 car en ce que le plot de commutation (26) est commandé par le générateur de rythme avec le demi-temps de retard constant du premier organe de retardement (12), et, à partir du multiplicateur de fréquence (18), les impulsions envoyées au premier compteur (28) sont multipliées par vingt et les impulsions envoyées au deuxième compteur (41) sont multipliées par dix.

19. Dispositif d'injection selon l'une des revendications 3 à 18, car en ce que le deuxième compteur (41), lorsqu'est atteinte la valeur maximale, prédéterminée de façon fixe, de chaque intervalle de comptage, produit une impulsion de commande pour le début de l'injection, qui est envoyée au premier et au second organe de retardement (12, 13).

20. Dispositif d'injection selon l'une des revendication 3 à 19, car en ce qu'il est prévu un troisième compteur (51) auquel est envoyé le signal de sortie du multiplicateur de fréquence (18) pour le deuxième compteur (41).

21. Dispositif d'injection selon la revendication 20, car en ce que le troisième compteur (51) est mis en circuit sous l'effet de l'impulsion de commande du deuxième compteur (41) produite lorsqu'est atteinte la valeur maximale.

22. Dispositif d'injection selon la revendication 20 ou 21, car en ce qu'il est prévu un dispositif de comparaison (53), qui peut recevoir la grandeur prescrite pour la durée de l'injection grandeur déterminée par le dispositif (8) de traitement de valeur de mesure et avec la mise en circuit du troisième compteur (51), est relié à celui-ci et lorsque sont obtenues la grandeur de comptage déterminée par le troisième compteur (51) et la grandeur prescrite pour la durée de l'injection, produit une impulsion de commande pour la fin de l'injection, qui est envoyée au premier et au second organe de retardement (12, 13).

*Fig.1*

*Fig.2*

Fig.3

**EP 0 114 378 B1**

*Fig.4*

5

# Fig.5

| U Ref | U Rückm | A | B | J |
|-------|---------|---|---|---|
| L | L | H | H | + |
| H | H | L | L | − |
| H | L | H | L | 0 |
| L | H | H | L | 0 |

# Fig.6